# EUROPEAN PATENT SPECIFICATION

(11) **EP 3 951 981 B1**
(45) Date of publication and mention of the grant of the patent: **24.09.2025**
(21) Application number: 19921964.3
(22) Date of filing: 24.10.2019
(51) Int. Cl.: C01D 15/06, H01M 10/0525, H01M 10/0562

(54) **ALL-SOLID-STATE SECONDARY BATTERY**
FESTKÖRPERSEKUNDÄRBATTERIE
BATTERIE RECHARGEABLE TOUT SOLIDE

(30) Priority: 26.03.2019 WO PCT/JP2019/012919
(43) Date of publication of application: 09.02.2022
(73) Proprietor: NGK Insulators, Ltd., Nagoya-shi, Aichi 467-8530 (JP)
(72) Inventor: ONISHI, Harunobu, Nagoya-Shi, Aichi 467-8530 (JP); OZAKI, Satoshi, Nagoya-Shi, Aichi 467-8530 (JP); YOSHIDA, Toshihiro, Nagoya-Shi, Aichi 467-8530 (JP); KATSUDA, Yuji, Nagoya-Shi, Aichi 467-8530 (JP); SATO, Yosuke, Nagoya-Shi, Aichi 467-8530 (JP); YAGI, En, Nagoya-Shi, Aichi 467-8530 (JP)
(74) Representative: Mewburn Ellis LLP
(86) International application number: PCT/JP2019/041711
(87) International publication number: WO 2020/194823

(56) References cited:
- WO-A1-2014/125633
- WO-A1-2016/194705
- WO-A1-2019/156158
- CN-A- 108 172 757
- JP-A- 2010 212 153
- JP-A- 2015 176 854
- JP-A- 2015 196 621
- JP-A- 2017 095 351
- JP-A- 2017 224 427
- JP-A- 2017 224 427
- JP-A- H0 554 712
- JP-A- S4 981 898
- DESHPANDE V K ET AL: "Electrical conductivity of the Li"2SO"4@?LiOH system", SOLID STATE IONICS, NORTH HOLLAND PUB. COMPANY. AMSTERDAM; NL, NL, vol. 18-19, 1 January 1986 (1986-01-01), pages 378 - 381, XP025786764, ISSN: 0167-2738, [retrieved on 19860101], DOI: 10.1016/0167-2738(86)90145-1

## Description

### TECHNICAL FIELD

The present invention relates to an all-solid-state secondary battery.

### BACKGROUND ART

Solid electrolytes used in electric storage devices, such as lithium ion secondary batteries and capacitors have been extensively studied and developed in recent years. Particularly, development of the solid electrolytes has been eagerly awaited that can maintain sufficient lithium ion conductivity from room temperature to high temperature. Non-Patent Literature 1 proposes use of a solidified body obtained by homogenously melting and then quenching Li₂SO₄ and LiOH as a solid electrolyte. Particularly, this solid electrolyte can be used in a device operable at low temperature. Each of JP 2017 224427 A and CN 108 172 757 A propose a solid electrolyte having a composition of Li₃BO₃-Li₂SO₄.

### CITATION LIST

### NON-PATENT LITERATURE

Non-Patent Literature 1: V. K. DESHPANDE, F. C. RAGHUWANSHI AND K. SINGH, "ELECTRICAL CONDUCTIVITY OF THE Li2SO4-LiOH SYSTEM", Solid State Ionics 18 & 19 (1986) 378-381

### SUMMARY OF INVENTION

However, the solid electrolyte described in Non-Patent Literature 1 does not have sufficiently high lithium ion conductivity at room temperature. In addition, the conductivity of the solid electrolyte in Non-Patent Literature 1 is less temperature dependent, so that the effect of increasing conductivity due to temperature rise cannot be expected. That is, this solid electrolyte is not a material having sufficient lithium ion conductivity from room temperature to high temperature. In response to these problems, the present inventors have obtained knowledge that a solid electrolyte expressed by 3LiOH·Li₂SO₄ exhibits high lithium ion conductivity at 25°C. However, it has been found that there is another problem that the lithium ion conductivity tends to decrease when the material of the above composition alone is held at high temperature for a long time.

The present inventors have currently found that by further adding boron to the solid electrolyte identified as 3LiOH.Li₂SO₄, a reduction of the lithium ion conductivity can be significantly suppressed even after being held at high temperature for a long time.

Therefore, an object of the present invention is to provide an all-solid-state secondary battery comprising a 3LiOH·Li₂SO₄-based solid electrolyte which is capable of significantly suppressing a reduction of the lithium ion conductivity even after being held at high temperature for a long time.

According to an aspect of the present invention, there is provided an all-solid-state secondary battery comprising a solid electrolyte as defined in claim 1. The solid electrolyte is identified as 3LiOH·Li₂SO₄ by X-ray diffractometry and further comprises boron. This solid electrolyte is formed from raw materials having a composition expressed by xLiOH·Li₂SO₄·yLi₃BO₃, wherein 1.0 ≤ x ≤ 4 and 0.002 ≤ y ≤ 1.

### DESCRIPTION OF EMBODIMENTS

### Solid Electrolyte

A solid electrolyte for use in an all-solid-state secondary battery of the present invention is a solid electrolyte identified as 3LiOH·Li₂SO₄ by X-ray diffractometry. This solid electrolyte further contains boron. By further adding boron to the solid electrolyte identified as 3LiOH·Li₂SO₄, a reduction of lithium ion conductivity can be significantly suppressed even after being held at high temperature for a long time. In other words, as described above, the present inventors have obtained knowledge that a solid electrolyte expressed by 3LiOH·Li₂SO₄ exhibits high lithium ion conductivity at 25°C. However, it has been found that there is another problem that the lithium ion conductivity tends to decrease when the solid electrolyte of the above composition alone is held at high temperature for a long time. In this regard, the problem can be solved by further adding boron to the solid electrolyte identified as 3LiOH·Li₂SO₄. Although mechanisms by which the inclusion of boron can improve ion conductivity retention are not clear, according to X-ray diffractometry, a diffraction peak of 3LiOH·Li₂SO₄ is slightly shifted to high angle side by the inclusion of boron, and thus it is inferred that boron is taken into one of sites in crystal structure of 3LiOH·Li₂SO₄ to improve the stability of the crystal structure against temperature.

Therefore, the solid electrolyte for use in the present invention is preferably used in an electric storage device, such as lithium ion secondary batteries and capacitors, and particularly preferably used in lithium ion secondary batteries. The lithium ion secondary battery may be an all-solid-state battery (for example, an all-solid-state lithium ion secondary battery). The lithium ion secondary battery may also be a liquid battery (for example, a lithium-air battery) comprising a solid electrolyte used as a separator, facing electrodes, and electrolytic solutions between the separator and the facing electrodes.

As described above, the solid electrolyte for use in the present invention is a solid electrolyte identified as 3LiOH·Li₂SO₄ by X-ray diffractometry. In other words, the solid electrolyte contains 3LiOH·Li₂SO₄ as a main phase. The inclusion of 3LiOH·Li₂SO₄ in the solid electrolyte can be confirmed by using 032-0598 in the ICDD database for the identification in an X-ray diffraction pattern. Here, "3LiOH·Li₂SO₄" refers to a composition that can be considered to have the same crystal structure as 3LiOH·Li₂SO₄ and does not necessarily have the same crystal composition as 3LiOH·Li₂SO₄. In other words, a composition of LiOH and Li₂SO₄ in a ratio other than 3:1 also falls within the solid electrolyte of the present invention as long as it has a crystal structure equivalent to that of 3LiOH·Li₂SO₄. Therefore, even the solid electrolyte containing boron (for example, 3LiOH·Li₂SO₄ in which boron is dissolved to form a solid solution having the X-ray diffraction peak shifted to a high angular side) is referred to as 3LiOH·Li₂SO₄ herein as long as the solid electrolyte is considered to have the same crystal structure as 3LiOH·Li₂SO₄. Similarly, inclusion of unavoidable impurities is also acceptable in the solid electrolyte for use in the present invention.

Therefore, the solid electrolyte may also include a different phase in addition to the main phase of 3LiOH·Li₂SO₄. The different phase may contain multiple elements selected from Li, O, H, S, and B, or only consist of multiple elements selected from Li, O, H, S, and B. Examples of the different phase include LiOH, Li₂SO₄, and/or Li₃BO₃ derived from raw materials. These different phases are regarded as residues of unreacted raw materials during the formation of 3LiOH·Li₂SO₄, but the amount of the different phases except Li₃BO₃ should be small since the different phases do not contribute to lithium ion conduction. A different phase containing boron, such as Li₃BO₃, may be included in the desired amount since the different phase may contribute to improvement in the lithium ion conductivity retention after being held at high temperature for a long time. The solid electrolyte may be composed of a single phase of 3LiOH·Li₂SO₄ in which boron is dissolved to from a solid solution.

The solid electrolyte used in the present invention further includes boron. A molar ratio of boron B to sulfur S contained in the solid electrolyte (B/S) is preferably more than 0.002 and less than 1.0, more preferably 0.003 or more and 0.9 or less, and still more preferably 0.005 or more and 0.8 or less. When a boron content is small, the retention ratio of lithium ion conductivity at high temperature reduces. However, when the B/S is in the above range, the retention ratio of the lithium ion conductivity can be improved. When the boron content is large, an absolute value of lithium ion conductivity may be reduced. However, when the B/S is in the above range, the absolute value of the lithium ion **conductivity** can increase since the content of an unreacted different phase containing boron reduces.

In an X-ray diffraction pattern of the solid electrolyte for use in the present invention observed with a radiation source of CuKα, a full-width at half-maximum of the peak in the vicinity of 2θ = 18.4° identified as 3LiOH·Li₂SO₄ is preferably 0.500° or less, more preferably 0.400° or less, and still more preferably 0.200° or less. In such a range, the lithium ion conductivity retention ratio can be further improved after being held at high temperature for a long time. The above full-width at half-maximum is preferred since the smaller full-width at half-maximum means the higher crystallinity. The lower limit value is not particularly limited, but is typically 0.08° or more, and more typically 0.1° or more.

In the X-ray diffraction pattern of the solid electrolyte for use in the present invention observed with a radiation source of CuKα, the I_{LiOH}/I_{LHS} ratio of a peak intensity I_{LIOH} in the vicinity of 2θ = 20.5° identified as LiOH to a peak intensity I_{LHS} in the vicinity of 2θ =18.4° identified as 3LiOH·Li₂SO₄ is preferably less than 0.234, more preferably 0.230 or less, and still more preferably 0.200 or less. A large number of LiOH may result in a reduction of an absolute value of the lithium ion conductivity, but the absolute value of the lithium ion conductivity can increase since a content of LiOH in the above range becomes low.

In the X-ray diffraction pattern of the solid electrolyte of the present invention observed with a radiation source of CuKα, the I_{Li2SO4}/I_{LHS} ratio of a peak intensity I_{Li2SO4} in the vicinity of 2θ = 22.2° identified as Li₂SO₄ to the peak intensity I_{LHS} in the vicinity of 2θ = 18.4° identified as 3LiOH·Li₂SO₄ is preferably less than 1.10, more preferably 0.50 or less, and still more preferably 0.20 or less. A large number of Li₂SO₄ may result in a reduction of an absolute value of the lithium ion conductivity, but the absolute value of the lithium ion conductivity can increase since a content of Li₂SO₄ in the above range becomes low.

The solid electrolyte for use in the present invention may be a green compact made of a powder obtained by grinding a melt-solidified body, but is preferably a melt-solidified body (i.e., a product solidified after hot melting).

### Manufacturing Method

According to a preferred aspect of the present invention, the solid electrolyte for use in the present invention can be manufactured through a step of melting and cooling a raw material including LiOH, Li₂SO₄, and Li₃BO₃ to form a solidified body. From the viewpoint of ion conductivity, the raw material for use in this case has a composition expressed by xLiOH·Li₂SO₄·yLi₃BO₃, wherein 1.0 ≤ x ≤ 4 and 0.002 ≤ y ≤ 1. For example, the solid electrolyte can be manufactured by (a) cooling a melt of raw materials including LiOH, Li₂SO₄ and Li₃BO₃ (raw materials of the above composition) to form a solidified body; (b) grinding the solidified body to produce solid electrolyte powder; and (c) shaping the solid electrolyte powder or remelting, cooling, and then solidifying the solid electrolyte powder to form the solid electrolyte. Cooling the melt in (a) may involve either quenching or slow cooling (e.g., cooling in a furnace). A method of grinding in (b) can be carried out by placing balls, such as zirconia balls, and the solidified body of the solid electrolyte into a container to grind the solidified body in accordance with a known technique under known conditions. Shaping in Step (c) can be carried out by various techniques, such as pressing (e.g., metallic mold pressing or rubber pressing), and preferably by metallic mold pressing. During cooling after remelting the solid electrolyte powder in Step (c), the temperature drop rate is preferably 10 to 1000 °C/h and more preferably 10 to 100 °C/h.

### All-solid-state Secondary Battery

As described above, the solid electrolyte for use in the present invention is preferably used in an all-solid-state secondary battery. In other words, according to a preferred aspect of the present invention, an all-solid-state secondary battery using the solid electrolyte is provided. This all-solid-state secondary battery comprises the solid electrolyte of the present invention between a positive electrode and a negative electrode. At least a part or all of the solid electrolyte constitutes lithium ion conduction material layers.

The positive electrode can be a positive electrode commonly used in a lithium secondary battery but preferably contains a lithium composite oxide. The lithium composite oxide is an oxide expressed by LiₓMO₂ (0.05<x<1.10; M is at least one transition metal; and M typically contains one or more of Co, Ni, Mn, and Al). The lithium composite oxide preferably has a layered rock-salt structure or a spinel-type structure. Examples of the lithium composite oxide having the layered rock-salt structure include LiₓCoO₂ (lithium cobaltate), LiₓNiO₂ (lithium nickelate), LiₓMnO₂ (lithium manganate), LiₓNiMnO₂ (lithium nickel manganate), LiₓNiCoO₂ (lithium nickel cobaltate), LixCoNiMnO₂ (lithium cobalt nickel manganate), LiₓCoMnO₂ (lithium cobalt manganate), Li₂MnO₃, and solid solutions with the above compounds. Particularly preferred are LiₓCoNiMnO₂ (lithium cobalt nickel manganate) and LiₓCoO₂ (lithium cobaltate, typically LiCoO₂). Examples of the lithium composite oxide having the spinel structure include a LiMn₂O₄-based material and a LiNi_{0.5}Mn_{1.5}O₄-based material.

The lithium composite oxide may contain one or more elements selected from Mg, Al, Si, Ca, Ti, V, Cr, Fe, Cu, Zn, Ga, Ge, Sr, Y, Zr, Nb, Mo, Ag, Sn, Sb, Te, Ba, Bi, and W. LiMPO₄ with an olivine structure, wherein M is at least one selected from Fe, Co, Mn, and Ni, or the like can also be suitably used.

The positive electrode may be in the form of a shaped mixture such as a positive electrode active material, an electron-conducting auxiliary agent, a lithium ion conductive material, and a binder generally referred to as a mixed material electrode, or in the form of a sintered plate obtained by sintering positive electrode raw material powder. The sintered plate may be a dense body or a porous body, and a solid electrolyte may be contained in pores of the porous body. Also, a protective layer for suppressing a reaction between the positive electrode and the solid electrolyte or a layer for reducing interface resistance may be introduced between the positive electrode active material and the solid electrolyte.

The negative electrode can be a negative electrode commonly used in a lithium secondary battery. Examples of such common negative electrode materials include carbon-based materials, metal or metalloid such as Li, In, Al, Sn, Sb, Bi, and Si, or alloy containing any of these. Besides, an oxide-based negative electrode may also be used.

A particularly preferred negative electrode contains a material capable of inserting and releasing a lithium ion at 0.4 V (vs Li/Li⁺) or more, and preferably contains Ti. A negative electrode active material satisfying such conditions is preferably an oxide containing at least Ti. Preferred examples of such negative electrode active materials include lithium titanate Li₄Ti₅O₁₂ (hereinafter, LTO), niobium-titanium composite oxide Nb₂TiO₇, and titanium oxide TiO₂, more preferably LTO and Nb₂TiO₇, and still more preferably LTO. Although LTO is typically known to have a spinel-type structure, it may also adopt other structures during charging and discharging. For example, the reaction of LTO proceeds in a two-phase coexistence of Li₄Ti₅O₁₂ (spinel structure) and Li₇Ti₅O₁₂ (rock-salt structure) during charging and discharging. Therefore, LTO is not limited to the spinel structure.

The negative electrode may be in the form of a shaped mixture including a negative electrode active material, an electron-conducting auxiliary agent, a lithium ion conductive material, and a binder generally which is referred to as a mixed material electrode, or in the form of a sintered plate obtained by sintering negative electrode raw material powder. The sintered plate may be a dense body or a porous body, and a solid electrolyte may be contained in pores of the porous body. Also, a protective layer for suppressing a reaction between the negative electrode and the solid electrolyte or a layer for reducing interface resistance may be introduced between the negative electrode active material and the solid electrolyte.

The all-solid-state secondary battery can be manufactured, for example, by i) providing a positive electrode forming a current collector and a negative electrode forming a current collector, and ii) sandwiching a solid electrolyte between the positive electrode and the negative electrode and applying pressure, heating or the like to unify the positive electrode, solid electrolyte, and negative electrode. The positive electrode, solid electrolyte, and negative electrode may be united by other techniques. In this case, examples of techniques for forming the solid electrolyte between the positive and negative electrodes include placing solid electrolytic green body or powder one electrode, screenprinting a paste of solid electrolyte powder on the electrode, colliding and solidifying the solid electrolyte powder by the aerosol deposition method or the like using the electrode as a substrate, and depositing the solid electrolyte powder on the electrode by the electrophoresis method to form a film.

### EXAMPLES

The present invention will be more specifically described by the following examples.

### Examples 1 to 17

### (1) Providing Raw Material Powder

A raw material mixing powder was obtained by mixing Li₂SO₄ powder (a commercialized product with a purity of 99% or more), LiOH powder (a commercialized product with a purity of 98% or more), and Li₃BO₃ (a commercialized product with a purity of 99% or more) so as to be molar ratios shown in Table 1. These powders were handled in a glove box under an Ar atmosphere at a dew point of -50°C or less, and a sufficient care was taken to prevent alternation, such as moisture absorption.

### (2) Synthesis by Melting

The raw material mixing powder was placed in a crucible made of a high purity of alumina under an Ar atmosphere, and the crucible was set in an electric furnace and heat-treated at 430°C for 2 hours to produce a melt. Subsequently, the melt was cooled in the electric furnace at 100°C/h to form a solidified product.

### (3) Grinding in Mortar

The resulting solidified product was ground in a mortar under an Ar atmosphere to obtain solid electrolyte powder having an average particle diameter D50 of 5 to 50 µm.

### (4) Melting

The solid electrolyte powder was subjected to metallic mold pressing under a pressure of 250 MPa in the glove box under an Ar atmosphere to form a pelletized solid electrolyte having a diameter of 10 mm. The pelletized solid electrolyte was sandwiched between two stainless steel (SUS) electrodes each having a diameter of 10 mm and a thickness of 0.5 mm. A 15 g weight was placed on the resulting stack, which was then heated at 400°C for 45 minutes to melt the solid electrolyte. The melt was then cooled at 100°C/h to form a solidified body.

### (5) Evaluation

The following evaluations were carried out on the resulting solidified body (solid electrolyte).

### <X-ray Diffractometry>

The solid electrolyte was analyzed by X-ray diffractometer (XRD, X-ray source: CuKα radiation) to obtain an X-ray diffraction pattern. Note that metal Si powder was added as an internal standard to adjust the 2θ position. The resulting X-ray diffraction pattern was compared with 032-0598 in the ICDD database to identify a 3LiOH·Li₂SO₄ crystal phase and determine the presence or absence of 3LiOH·Li₂SO₄. Based on the resulting XRD profile, a full-width at half-maximum of the peak in the vicinity of 2θ = 18.4° identified as 3LiOH·Li₂SO₄ was calculated. Furthermore, the ratio of the peak intensity I_{LiOH} in the vicinity of 2θ = 20.5° identified as LiOH to the peak intensity I_{LHS} in the vicinity of 2θ = 18.4° identified as 3LiOH·Li₂SO₄ (I_{LioH}/I_{LHS}) was calculated. Similarly, the ratio of the peak intensity I_{Li2SO4} in the vicinity of 2θ = 22.2° identified as Li₂SO₄ to the peak intensity I_{LHS} in the vicinity of 2θ = 18.4° identified as 3LiOH·Li₂SO₄ (I_{Li2SO4}/I_{LHS}) was calculated. The results were as shown in Table 1.

### <Ion Conductivity and Conductivity Retention Ratio after Being Held at 150°C for 100 Hours>

The lithium ion conductivity of the solid electrolyte was measured using the common AC impedance measurement as follows. First, a solid electrolyte was sandwiched between two stainless steel (SUS) electrodes under an Ar atmosphere and put in a cell (coin cell CR2032, manufactured by Hohsen Corp.) and sealed to produce an ion conductivity measuring cell. This ion conductivity measuring cell was put in a thermostatic desiccator at 150°C, and the conductance (1/r) was measured by an AC impedance method using an AC impedance measurement apparatus (VMP3, manufactured by BioLogic Sciences Instruments). Initial lithium ion conductivity C₀ was calculated based on a formula of the measured value and lithium ion conductivity σ=L/r (1/A).

After the solid electrolyte was held in the ion conductivity measuring cell at 150°C for 100 hours, lithium ion conductivity C₁ was measured in the same manner as above. The lithium ion conductivity C₁ of the solid electrolyte after being held at 150°C for 100 hours was divided by the initial lithium ion conductivity C₀ and multiplied by 100 to obtain conductivity retention ratio (%) after being held at 150°C for 100 hours.

### <Chemical Analysis>

Quantitative analysis of boron and sulfur was carried out for the resulting solid electrolyte in each Example. Each of boron and sulfur was quantitatively analyzed by ICP Atomic Emission Spectroscopy (ICP-AES) with a calibration-curve method. Each analytical value of boron and sulfur was converted to moles and calculated as B/S.

### Results

Production conditions and evaluation results of the solid electrolytes in Examples 1 to 17 are summarized in Table 1. In Examples 1 to 17, the rate of decrease in weight is significantly low and only 1% or less in the steps of melting raw material mixing powder including LiOH, Li₂SO₄, and Li₃BO₃ to synthesize the solid electrolyte and remelting the solid electrolyte powder. Thus, it is presumed that the composition of Li, O, H, S, and B that constitute the solid electrolyte remains substantially unchanged from the composition at the time of preparing the raw material powder.

**[Table 1]**

| | Raw material blending ratio LiOH:Li₂SO₄:Li₃BO₃ (molar ratio) | Production method | Presence or absence of 3LiOH·Li₂SO₄ by XRD | B/S (molar ratio) | 3LiOH·Li₂SO₄ XRD peak full-width at half-maximum (°) | LiOH /3LiOH Li₂SO₄ XRD peak intensity ratio I_{LiOH}/I_{LHS} | Li₂SO₄ /3LiOH·Li₂SO₄ XRD peak intensity ratio I_{Li2SO4}/I_{LHS} | Conductivity retention ratio after holding at 150°C for 100 hours (%) | Ion conductivity after holding at 150°C for 100 hours (S/cm³) |
|---|---|---|---|---|---|---|---|---|---|
| Ex. 1 | 3 : 1 : 1 | Melting | Present | 1.0 | 0.151 | 0.142 | 0 | 100 | 1.9×10⁻³ |
| Ex. 2 | 3 : 1 : 0.1 | Melting | Present | 0.10 | 0.129 | 0.125 | 0 | 100 | |
| Ex. 3 | 3 : 1 : 0.05 | Melting | Present | 0.049 | 0.136 | 0.068 | 0 | 98 | 4.7×10⁻³ |
| Ex. 4 | 3 : 1 : 0.01 | Melting | Present | 0.010 | 0.141 | 0.091 | 0 | 94 | |
| Ex. 5* | 3 : 1 : 0 | Melting | Present | 0 | 0.149 | 0.091 | 0 | 75 | |
| Ex. 6 | 2.6 : 1 : 1 | Melting | Present | 1.0 | 0.155 | 0.038 | 0 | 99 | |
| Ex. 7 | 2.6 : 1 : 0.2 | Melting | Present | 0.20 | 0.142 | 0.036 | 0 | 100 | |
| Ex. 8 | 2.6 : 1 : 0.05 | Melting | Present | 0.048 | 0.141 | 0.027 | 0 | 100 | 4.2×10⁻³ |
| Ex. 9 | 2.6 : 1 : 0.01 | Melting | Present | 0.010 | 0.147 | 0.044 | 0 | 98 | |
| Ex. 10 | 2.6 : 1 : 0.002 | Melting | Present | 0.0020 | 0.145 | 0.031 | 0 | 80 | |
| Ex. 11* | 2.6 : 1 : 0 | Melting | Present | 0 | 0.185 | 0.057 | 0 | 57 | |
| Ex. 12 | 4 : 1 : 0.05 | Melting | Present | 0.050 | 0.123 | 0.234 | 0 | 96 | 2.9×10⁻⁴ |
| Ex. 13 | 2.3 : 1 : 0.05 | Melting | Present | 0.050 | 0.128 | 0.022 | 0 | 97 | |
| Ex. 14 | 2.0 : 1 : 0.05 | Melting | Present | 0.049 | 0.127 | 0 | 0.048 | 99 | 1.8×10⁻³ |
| Ex. 15 | 1.8: 1 : 0.05 | Melting | Present | 0.050 | 0.110 | 0 | 0.045 | 96 | |
| Ex. 16 | 1.5 : 1 : 0.05 | Melting | Present | 0.051 | 0.124 | 0 | 0.192 | 82 | |
| Ex. 17 | 1.0 : 1 : 0.05 | Melting | Present | 0.048 | 0.120 | 0 | 1.03 | 81 | 1.6×10⁻⁴ |

| | | | | | | | | | |
|---|---|---|---|---|---|---|---|---|---|
| * represents Comparative Example. | | | | | | | | | |

The results in Table 1 will be explained in detail. The main phase of all the X-ray diffraction patterns of Examples 1 to 17 was consistent with 032-0598 in the ICDD database, indicating the presence of a 3LiOH·Li₂SO₄ crystal phase. The main phase here refers to a peak that is not attributed to LiOH, Li₂SO₄, and Li₃BO₃. The high angle shift of the X-ray diffraction pattern of the 3LiOH·Li₂SO₄ crystal phase was observed especially in Examples containing a high concentration of boron. For example, the peak at 2θ = 18.43° of 3LiOH·Li₂SO₄ in Example 5 without Li₃BO₃ added was peak-shifted to a high angle side of 18.46° in Example 2 with Li₃BO₃ added. Thus it is presumed that boron is solid-soluted in the framework of the 3LiOH·Li₂SO₄ crystal phase. Except for the high angle shift, the results were consistent with 032-0598 in the ICDD database, indicating that the solid electrolyte identified as 3LiOH·Li₂SO₄ was included. In Examples 1 to 4, 6 to 10, and 12 to 17, which were synthesized by adding Li₃BO₃, the chemical analysis showed that B/S became greater than 0, indicating boron was contained in the solid electrolyte.

In Examples 5 and 11 without boron, the ion conductivity retention ratio was small and 75% or less. When the B/S was 0.002 or more as in Example 10, it was found that the ion conductivity retention ratio became large and 80% or more. Comparing the ion conductivity in Examples 1 and 3 after being held at 150°C for 100 hours, it was found that the conductivity of Example 1 was low. This was presumably due to the high content of unreacted different phases as a result of the large amount of Li₃BO₃ added, and it was found that B/S, which shows the amount of boron added, was preferably less than 1.0.

Comparing the ion conductivities of Examples 3, 8, and 12, in which LiOH is detected by XRD after being held at 150°C for 100 hours, the ion conductivities of Examples 3 and 8 are higher than that of Example 12. Regarding the peak intensity ratio (I_{LioH}/I_{LHS}) by X-ray diffractometry, it is presumed that LiOH remains as a different phase because the value of I_{LioH}/I_{LHS} is large in Example 12, and this inhibits ion conduction. Therefore, if LiOH is detected as a different phase, the peak intensity ratio (I_{LiOH}/I_{LHS}) is preferably less than 0.234. Comparing the ion conductivities of Examples 14 and 17, in which Li₂SO₄ is detected by XRD after being held at 150°C, the ion conductivity of Example 14 is higher than that of Example 17. Regarding the peak intensity ratio (I_{Li2SO4}/I_{LHS}) by X-ray diffractometry, it is presumed that Li₂SO₄ remains as a different phase because the value of I_{Li2SO4}/I_{LHS} is large in Example 17, and this inhibits ion conduction. Therefore, if Li₂SO₄ is detected as a different phase, the peak intensity ratio (I_{Li2SO4}/I_{LHS}) is preferably less than 1.1.

The following can be seen by focusing on Examples 3, 8, 14, and 17. In these Examples, all of raw material blending ratios are compositions within the range expressed by xLiOH·Li₂SO₄·yLi₃BO₃, wherein 1.0 ≤ x ≤ 4 and 0.002 ≤ y ≤ 1. Moreover, since the Li₂SO₄:Li₃BO₃ ratio is 1:0.05, the property change caused by varying only the molar ratio of LiOH (x in the above formula) can be observed. Although Examples 3, 8, 14, and 17 all show desirable results in terms of the conductivity retention ratio after being held at 150°C for 100 hours, the ion conductivities of Examples 3, 8, and 14, where x = 3, 2.6, and 2, are higher than that of Example 17, where x = 1.0. From this, the range of 2.0 ≤ x ≤ 4 and 0.002 ≤ y ≤ 1 is the preferred range in terms of ion conductivity.

### <Production of All-Solid-State Secondary Battery>

All-solid-state secondary batteries were produced using the solid electrolytes of Example 3 and Example 5, and the resistance increase ratio was checked after being held at 150°C for 100 hours. As the positive electrode, a densely sintered plate of lithium cobaltate with a current-collecting layer formed on one surface was prepared. As the negative electrode, a densely sintered plate of lithium titanate with a current-collecting layer formed on another surface was prepared. The powdered pressing body of the solid electrolyte was sandwiched between these positive and negative electrode plates and made into a cell while applying pressure. The resulting cell was placed at 150°C and AC impedance measurement was carried out. As the resistance of the solid electrolyte part, the resistance R₀ immediately after the temperature was raised to 150°C and the resistance R₁ after the temperature was kept at 150°C for 100 hours were measured. The **resistance** increase ratio R₁/R₀ was calculated from the resulting resistance values, and it was 1.0 in Example 3 (Example with boron added) and 1.3 in Example 5 (Comparative Example without boron added). It was found that the resistance increase was small in the all-solid-state secondary battery using the electrolyte with boron added to 3LiOH·Li₂SO₄. This indicates that the charge-discharge capacity of the cell in Example 5 decreases after 100 hours at 150°C due to the increase in resistance of the solid electrolyte part, but the cell in Example 3 can be charged and discharged without any decrease in capacity due to the increase in resistance of the solid electrolyte part even after 100 hours at 150°C.

## Claims

1. An all-solid-state secondary battery comprising a solid electrolyte, wherein the solid electrolyte is identified as 3LiOH·Li₂SO₄ by X-ray diffractometry and further comprises boron, said solid electrolyte being formed from raw materials having a composition expressed by xLiOH·Li₂SO₄·yLi₃BO₃, wherein 1.0 ≤ x ≤ 4 and 0.002 ≤ y ≤ 1.

2. The all-solid-state secondary battery according to claim 1, wherein a molar ratio B/S of boron B to sulfur S contained in the solid electrolyte is more than 0.002 and less than 1.0.

3. The all-solid-state secondary battery according to claim 1 or 2, wherein the solid electrolyte is such that a full-width at half-maximum of a peak in the vicinity of 2θ = 18.4° identified as 3LiOH·Li₂SO₄ is 0.500° or less in an X-ray diffraction pattern of the solid electrolyte observed with a radiation source of CuKα.

4. The all-solid-state secondary battery according to any one of claims 1 to 3, wherein the solid electrolyte is such that an I_{LiOH}/I_{LHS} ratio of a peak intensity I_{LIOH} in the vicinity of 2θ = 20.5° identified as LiOH to a peak intensity I_{LHS} in the vicinity of 2θ = 18.4° identified as 3LiOH·Li₂SO₄ is less than 0.234 in the X-ray diffraction pattern of the solid electrolyte observed with the radiation source of CuKα.

5. The all-solid-state secondary battery according to any one of claims 1 to 4, wherein the solid electrolyte is such that an I_{Li2SO4}/I_{LHS} ratio of a peak intensity I_{Li2SO4} in the vicinity of 2θ = 22.2° identified as Li₂SO₄ to the peak intensity I_{LHS} in the vicinity of 2θ = 18.4° identified as 3LiOH·Li₂SO₄ is less than 1.10 in the X-ray diffraction pattern of the solid electrolyte observed with the radiation source of CuKα.

6. The all-solid-state secondary battery according to any one of claims 1 to 5, wherein the solid electrolyte is a melt-solidified body.

7. The all solid state secondary battery according to any one of the claims 1 to 6, comprising the solid electrolyte between a positive electrode and a negative electrode.

## Patentansprüche

1. Festkörper-Sekundärbatterie, umfassend einen festen Elektrolyten, wobei der feste Elektrolyt durch Röntgenbeugung als 3LiOH·Li₂SO₄ identifiziert wurde und ferner Bor umfasst, wobei der feste Elektrolyt aus Rohmaterialien mit einer Zusammensetzung gebildet ist, die durch xLiOH·Li₂SO₄·yLi₃BO₃ ausgedrückt wird, worin 1,0 ≤ x ≤ 4 ist und 0,002 ≤ y ≤ 1 ist.

2. Festkörper-Sekundärbatterie nach Anspruch 1, wobei ein Molverhältnis B/S von Bor B zu Schwefel S, die in dem festen Elektrolyten enthalten sind, mehr als 0,002 und weniger als 1,0 beträgt.

3. Festkörper-Sekundärbatterie nach Anspruch 1 oder 2, wobei der feste Elektrolyt derartig ist, dass eine volle Breite bei Halbmaximum eines Reflexes in der Nähe von 2θ = 18,4°, identifiziert als 3LiOH·Li₂SO₄, 0,500° oder weniger in einem Röntgenbeugungsmuster des festen Elektrolyten beträgt, der mit einer CuKα-Strahlenquelle untersucht wurde.

4. Festkörper-Sekundärbatterie nach einem der Ansprüche 1 bis 3, wobei der feste Elektrolyt derartig ist, dass ein Verhältnis I_{LiOH}/I_{LHS} einer Reflex-Intensität I_{LiOH} in der Nähe von 2θ = 20,5°, identifiziert als LiOH, zu einer Reflex-Intensität I_{LHS} in der Nähe von 2θ = 18,4°, identifiziert als 3LiOH·Li₂SO₄, weniger als 0,234 in dem Röntgenbeugungsmuster des festen Elektrolyten beträgt, der mit der CuKα-Strahlenquelle untersucht wurde.

5. Festkörper-Sekundärbatterie nach einem der Ansprüche 1 bis 4, wobei der feste Elektrolyt derartig ist, dass ein Verhältnis I_{Li2SO4}/I_{LHS} einer Reflex-Intensität I_{Li2SO4} in der Nähe von 2θ = 22,2°, identifiziert als Li₂SO₄, zu einer Reflex-Intensität I_{LHS} in der Nähe von 2θ = 18,4°, identifiziert als 3LiOH·Li₂SO₄, weniger als 1,10 in dem Röntgenbeugungsmuster des festen Elektrolyten beträgt, der mit der CuKα-Strahlenquelle untersucht wurde.

6. Festkörper-Sekundärbatterie nach einem der Ansprüche 1 bis 5, wobei der feste Elektrolyt ein schmelzverfestigter Körper ist.

7. Festkörper-Sekundärbatterie nach einem der Ansprüche 1 bis 6, umfassend den festen Elektrolyten zwischen einer positiven Elektrode und einer negativen Elektrode.

## Revendications

1. Batterie secondaire tout solide comprenant un électrolyte solide, dans laquelle l'électrolyte solide est identifié comme 3LiOH•Li₂SO₄ par diffractométrie aux rayons X et comprend en outre du bore, ledit électrolyte solide étant formé à partir de matières premières présentant une composition exprimée par xLiOH•Li₂SO₄•yLi₃BO₃, dans laquelle 1,0 ≤ x ≤ 4 et 0,002 ≤ y ≤ 1.

2. Batterie secondaire tout solide selon la revendication 1, dans laquelle un rapport molaire B/S du bore B au soufre S contenus dans l'électrolyte solide est supérieur à 0,002 et inférieur à 1,0.

3. Batterie secondaire tout solide selon la revendication 1 ou 2, dans laquelle l'électrolyte solide est tel qu'une largeur totale à mi-hauteur d'un pic au voisinage de 2θ = 18,4° identifié en tant que 3LiOH•Li₂SO₄ est de 0,500° ou moins dans un motif de diffraction des rayons X de l'électrolyte solide observé avec une source de rayonnement de CuKα.

4. Batterie secondaire tout solide selon l'une quelconque des revendications 1 à 3, dans laquelle l'électrolyte solide est tel qu'un rapport I_{LiOH}/I_{LHS} d'un pic d'intensité I_{LIOH} au voisinage de 2θ = 20,5° identifié en tant que LiOH à un pic d'intensité I_{LHS} au voisinage de 2θ = 18,4° identifié en tant que 3LiOH•Li₂SO₄ est inférieur à 0,234 dans le diagramme de diffraction des rayons X de l'électrolyte solide observé avec la source de rayonnement de CuKα.

5. Batterie secondaire tout solide selon l'une quelconque des revendications 1 à 4, dans laquelle l'électrolyte solide est tel qu'un rapport I_{LiSO4}/I_{LHS} d'un pic d'intensité I_{Li2SO4} au voisinage de 2θ = 22,2° identifié en tant que Li₂SO₄ au pic d'intensité I_{LHS} au voisinage de 2θ = 18,4° identifié en tant que 3LiOH•Li₂SO₄ est inférieur à 1,10 dans le diagramme de diffraction des rayons X de l'électrolyte solide observé avec la source de rayonnement de CuKα.

6. Batterie secondaire tout solide selon l'une quelconque des revendications 1 à 5, dans laquelle l'électrolyte solide est un corps solidifié par fusion.

7. Batterie secondaire tout solide selon l'une quelconque des revendications 1 à 6, comprenant l'électrolyte solide entre une électrode positive et une électrode négative.
